# EUROPEAN PATENT SPECIFICATION

(11) **EP 2 391 170 B1**
(45) Date of publication and mention of the grant of the patent: **21.09.2016**
(21) Application number: 11178899.8
(22) Date of filing: 01.07.2008
(51) Int. Cl.: H04W 72/04, H04L 5/00, H04L 1/18, H04L 27/26

(54) **High speed uplink packet access method in multi-carrier time division synchronization code division multiple access system and corresponding system**
Verfahren für schnellen Uplink-Paketzugriff in einem System mit Mehrträger-Synchronisationscodemultiplexverfahren mit Zeitaufteilung und entsprechendes System
Procédé d'accès par paquets en liaison montante à grande vitesse d'un système d'accès multiple à division de code de synchronisation de division temporelle multiporteuse et système correspondant

(30) Priority: 05.07.2007 CN 200710129376; 07.09.2007 CN 200710145316
(43) Date of publication of application: 30.11.2011
(62) Divisional of application: 08757894.4
(73) Proprietor: ZTE Corporation, Shenzhen, Guangdong 518057 (CN)
(72) Inventor: Zhang, Yincheng, 518057 Shenzen (CN); Chen, Hui, 518057 Shenzen (CN); Liu, Hu, 518057 Shenzen (CN)
(74) Representative: Novagraaf Technologies

(56) References cited:
- EP-A1- 1 768 292
- EP-A1- 1 775 968
- EP-A2- 1 643 694
- WO-A2-2007/016117
- US-A1- 2006 274 712
- "3GPP TR 25.827 V7.1.0 - 3rd Generation Partnership Project; Technical Specification Group Radio Access Network; 1.28 Mcps TDD Enhanced Uplink; Physical Layer Aspects (Release 7)", 3GPP TR 25.827 V7.1.0, 1 May 2007 (2007-05-01), pages 1-34, XP55009043, 3GPP support office - 650 Route des Lucioles - Sophia Antipolis Valbonne - FRANCE Retrieved from the Internet: URL:http://www.quintillion.co.jp/3GPP/Spec s/25827-710.pdf [retrieved on 2011-10-10]
- ZTE: "LCR TDD: Non-Scheduled Traffic and Scheduled Traffic Transmissions", 3GPP DRAFT; R1-062969(NON-SCHEDULED TRAFFIC AND SCHEDULED TRAFFIC TRANSMISSIONS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061014, 14 October 2006 (2006-10-14), XP050103439, [retrieved on 2006-10-14]
- "3rd Generation Partnership Project; Technical Specification Group Radio Access Network; 1.28 Mcps TDD Enhanced Uplink; RAN WG2 Stage 2 Decisions (Release 7)", 3GPP STANDARD; 3GPP TR 30.302, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.1.0, 1 June 2007 (2007-06-01), pages 1-28, XP050373299,

## Description

### Filed of the Invention

The present invention relates to communication field, in particular to a high speed uplink packet access method in multi-carrier time division synchronization code division multiple access system and the system thereof.

### Background of the Invention

In order to satisfy the increasing demand for high speed uplink packet data service and also to better support the higher service quality in corporation with the high speed downlink packet access technology (HSDPA) technology, it is introduced respectively into Re16 and Re17 through 3GPP the high speed uplink packet access (HSUPA) technology based on the wideband code division multiple access (WCDMA) and time division synchronization code division multiple access (TD-SCDMA), which is also called as enhanced uplink or enhanced dedicated channel (E-DCH) technology, Higher user peak value rate and cell data throughput can be obtained through HSUPA which uses the technologies of hybrid automatic repeat request (HARQ), high order modulation (16QAM), node B quick schedule and rise over thermal (RoT) control based on T/P and so on, and the stable RoT control can be achieved.

HSUPA inherits the technologies of HARQ, quick schedule and so on from HSDPA based on which it increases some particular enhanced technologies of uplink transport.

HSUPA uses asynchronous HARQ mode of increase redundance (IR), improving the performance of system by obtaining re-transport merge and coding gain. The re-transport system also uses the stop and wait modes of N channel and so on as same as the HSDPA.

On physical layer bearer aspect, the HSUPA introduces enhance physical uplink channel (E-PUCH) to bear the corresponding transport channel E-DCH. At the same time, in order to achieve the corresponding control, schedule and feedback, the HSUPA introduces into the physical layer three physical control channels, an enhanced random access uplink control channel (E-RUCCE), an enhanced absolute grant channel (E-AGCH) and an enhanced HARQ acknowledgement indicator channel (E-HICH), wherein the E-RUCCH is used for requesting grant to transmit date under the condition that user equipment (UE) in CELL-DCH status has no resource grant, with the transport mode being preemptive access method and the process same as the physical random access channel (PRACH) and the E-RUCCH can share physical code channel with the PRACH. If the UE having grant currently, it is also possible that the current schedule information (SI) of the UE can be multiplexed in MAC-e protocol data unit (PDU) of E-PUCH to be transmitted to the node B, for achieving the target of schedule request. The schedule information (SI) includes information of power margin, link loss, buffer size and so on.

The E-AGCH is used for the node B to transmit to the UE the schedule resource grant information which includes the physical control information as follows: power grant information, time slot grant information, code channel grant information, temporary user network identity, the number of the E-UCCH, resource duration time indication, the E-DCH cyclic sequence number, E-HICH channel indication and so on.

The E-HICH is used for the node B to feedback to the UE acknowledgement (ACK)/non-acknowledgement (NACK) information of each transport block. In order to decrease the physical channel overhead, the E-HICH uses the method of secondary spread spectrum, therefore achieving at most 80 signature users borne on one existing physical code channel. At the same time, the user signature sequence and the distributing resource are correlated with each other dynamically, which can meet the demand of supporting large capacity data users being on line at the same time.

The E-AGCH channel is allocated to the UE by radio network controller (RNC) during the establishment/reconfiguration of the radio bearer. The management and the distribution of the E-AGCH are performed in integration method wherein one UE is allocated with one set which can include one to four E-AGCH physical channels. The UE monitors all the E-AGCH channels to read in every transport time interval (TTI) (5ms) the relative schedule grant information in at most one E-AGCH channel according to the UE identification, in order to carry out the emission of the E-PUCH channel.

One cell can be configured with multiple E-HICH physical channels. One to four E-HICH physical channels are allocated to the user equipment by RNC during the establishment/reconfiguration of the radio bearer. In practice, in each TTI, one of physical channels is dynamically allocated to the UE by the node B through the E-AGCH.

The HSUPA introduces MAC-e/MAC-es sublayer (entity) into the MAC layer of the UE and the node B/RNC, in order to achieve the relative functions of schedule, priority process, feedback, re-transport and so on. On the network side, resource grant and ACK/NACK feedback are directly given by the MAC-e sublayer positioned in the node B, which can obviously improve the speed of the schedule and transport/re-transport and decrease the entire time delay of the data transport. On the network side, the MACes sublayer is positioned in the RNC, for ensuring the sequential transport of data packet. In addition, on UE side, the UE selects in each TTI (5ms), the enhanced transport format combination (E-TFC) based on the current grant information and the reference E-PUCH power under the base station closed loop control, obtaining the appropriate transport block size and modulation mode (the modulation mode and the transport block size have veiled association).

Besides the transport mode based on grant (namely, scheduling transport), the HSUPA also introduces non-scheduling transport to solve the requirements of time delay sensitive service and ensure the quality of service (OoS) of speed service. Resources of the scheduling transport can be allocated in real time by the node B which comprehensively considers the factors of schedule request of all UEs, the radio broadcasting environment, interference suppression of the neighboring area and so on. Such schedule method is quite suitable for the services with strong unexpectedness, great flow fluctuation and insensitiveness of time delay. With the non-scheduling transport mode, the transmitted resources are semi-statically allocated in advance by the RNC, which mode is suitable for the services sensitive to time delay, such as signaling radio bearer (SRB), the guarantee bit rate (GBR) and so on. From the view of bearer level, the related resources (such as HARQ entity) of these two schedule methods are mutually independent. At most 8 HARQ processes are allowed for single carrier of each UE wherein the scheduling transport and non-scheduling transport respectively use 4 HARQ processes.

The HSUPA technology of TD-SCDMA system in the specification 3GPP is based on a single carrier system, namely, one cell one carrier wherein based on quadrature phase shift keying (QPSK), the theoretical peak speed can be up to 1.1 Mbps, while based on 16QAM the theoretical peak speed can be up to 2.2 Mbps. The relative detailed information may be obtained referring to 3GPP. However, in other fields, such as the specification of China Communication Standardized Protocol (CCSA), the TD-SCDMA system is based on multi-carrier system. The multi-carrier TD-SCDMA system has the following characteristics: one cell comprises multiple carriers in multiple carrier TD-SCDMA system. One of the multiple carriers is the main carrier, and other carriers are assistant carriers. All or part of the common channels are established and used only on the main carrier. In order to take fully advantage of the carrier resources of the multi-carrier TD-SCDMA system and improve the cell uplink transport throughput, it is necessary to introduce the HSUPA technology into the multi-carrier TD-SCDMA system. While when introducing the HSUPA technology into the multi-carrier TD-SCDMA system, the difference between the multiple carrier TD-SCDMA system and the single carrier TD-SCDMA system needs to be considered.

US20060274712 A1 provides a related technical solution. However, the above mentioned problems still remain unsolved.

### Summary of Invention

In view of the one or more questions above mentioned, the present invention provides a high speed uplink packet access method according to the subject-matter of claim 1 and a system according to the subject-matter of claim 6 used for multi-carrier TD-SCDMA system.

The high speed uplink packet access method used for multi-carrier TD-SCDMA system according to the present invention comprises scheduling transport and non-scheduling transport.

Meanwhile, the scheduling transport comprises: E-PUCH, E-AGCH and E-HICH physical channel resources are configured on one or more carriers in the cell simultaneously; the E-PUCH physical channel carrier resource is allocated to a certain user equipment in the cell and the E-AGCH and E-HIICH physical channel resources are allocated on this carrier; as for the configured carrier resources, a MAC-e/MAC-es (enhance media access control) entity is established for user equipment respectively on the network side and the terminal side, and the scheduling E-DCH transport data are mapped to the E-DCH transport channel through the entity and further are mapped to the E-PUCH physical channel resource of the carrier; on the allocated carrier resources, the node B, through an E-AGCH physical channel, dynamically schedules and grants to the user equipment the E-PUCH physical channel resources on the carrier, for scheduling the E-DCH data transport, and feeds back the status information of the transport and reception of the scheduling E-DCH data on the carrier through an E-HICH channel on the carrier.

Meanwhile, the non-scheduling transport comprises: one carrier is allocated to the user equipment within the cell, the E-PUCH physical channel resource transmitted by the non-scheduling E-DCH is allocated on the carrier, and the non-scheduling E-DCH transport data are transmitted through the resource.

Meanwhile, as for one user equipment, only one of the scheduling E-DCH transport data or the non-scheduling E-DCH transport date can be transmitted in one same transport time interval.

Meanwhile, as for one user equipment, its allocated non-scheduling E-PUCH physical channel resource and the scheduling E-PUCH physical channel resource can be on a same carrier or on different carriers; but the carriers where the non-scheduling E-PUCH physical channel resource and the scheduling E-PUCH physical channel resource may be same or different for all user equipments in the cell.

Meanwhile, the process of allocating the E-PUCH physical channel carrier resource comprises the following steps: the radio network controller requests the base station to allocate the resource used for transmitting the E-DCH transport data to the user equipment; the base station in response of the request of the radio network controller, allocates the E-PUCH physical channel carrier resource to the user equipment, and allocates the E-AGCH physical channel and the E-HICH physical channel on the E-PUCH physical channel carrier resource.

Alternatively, the process of allocating the E-PUCH physical channel carrier resource comprises the following steps: the radio network controller allocates the E-PUCH physical channel carrier resource to the user equipment and requests the base station to allocate the the resource used for controlling the transport of the E-DCH transport data to the user equipment; the base station, in response of the request of the radio network controller, allocates the E-AGCH physical channel and the E-HICH physical channel on the E-PUCH physical channel carrier resource.

The high speed uplink packet access system used for multi-carrier TD-SCDMA system, according to the present invention comprises a resource allocation unit, for allocating the E-PUCH physical channel carrier resource to the user equipment and allocating the E-AGCH physical channel and the E-HICH physical channel on the allocated E-PUCH physical channel carrier resource; a data mapping unit, for mapping the E-DCH transport data onto the E-PUCH physical channel; and a data transport unit for scheduling and granting the E-PUCH physical channel to the user equipment through the E-AGCH physical channel so as to transmit the E-DCH transport data to the base station, and feeding back to the user equipment the status information of the E-DCH transport data received by the base station, through the E-HICH channel.

Meanwhile, the E-DCH transport data are mapped to the E-DCH transport channel by the data mapping unit through media access control layer and further mapped onto the E-PUCH physical channel.

Another high speed uplink packet access method used for multi-carrier TD-SCDMA system according to the present invention comprises allocating to the user equipment the E-PUCH physical channel and the non-scheduling E-PUCH physical channel which can be scheduling ; and the user equipment selects the scheduling E-PUCH physical channel or non-scheduling E-PUCH physical channel to carry out the scheduling or non-scheduling data transport, wherein the scheduling E-PUCH physical channel and the non-scheduling E-PUCH physical channel can be positioned on a same carrier or different carriers.

In the present invention, the HSUPA technology can be independently supported on each carrier in a multiple carrier cell. One UE is statically configured to carry out the E-DCH transport on one carrier. Different UEs can carry out the scheduling E-DCH transport on different carriers. With the present invention, the carrier resources in the multiple carrier TD-SCDMA system can be utilized sufficiently, thus improving the cell uplink transport throughout.

### Brief Description of Drawings

The drawings illustrated herein provide a further understanding of the present invention and constitute a part of the application. The exemplary embodiments of the present invention and the explanation thereof are given for explaining the present invention, and thus are not limitative of the present invention, in which:
Fig.1 is a flowchart of data transport method according to an embodiment of the present invention;
Fig.2 is a schematic view of data mapping process in the method shown in Fig.1;
Fig.3 is a schematic view of data reception process in the method shown in Fig.1;
Fig.4 is a block diagram of data transport system to realize the method shown in Figs.1 to 3 and
Fig.5 is a flow chart of data transport method according to another embodiment of the present invention.

### Detailed Description

The embodiments of the present invention are detailed in connection with the drawings.

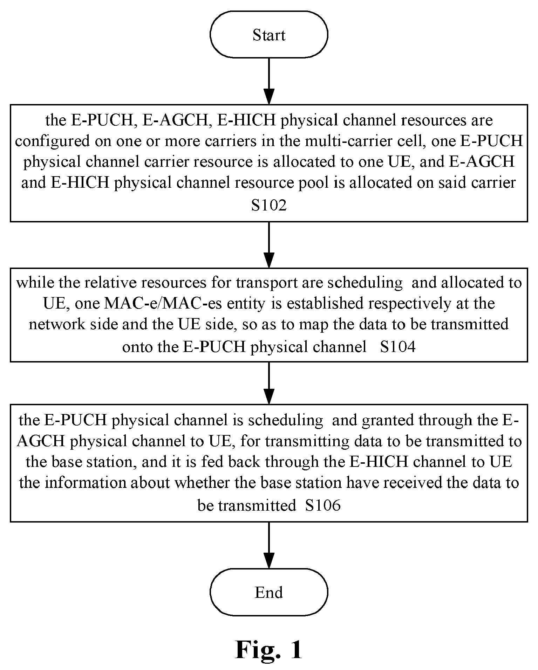

In a multiple carrier TD-SCDMA system, if a multiple carrier cell (including N carriers) has been established, as shown in Fig.1, the high speed uplink packet access method according to the embodiment of the present invention comprises the following steps:
S102, allocating an E-PUCH physical channel carrier resource to the user equipment and allocating the E-AGCH physical channel and the E-HICH physical channel on the allocated E-PUCH physical channel carrier resource.

In Step S102, firstly, the E-PUCH, E-AGCH and E-HICH physical channel resources are simultaneously configured on one or more carriers in the multiple-carrier cell.

During the process, compared with the corresponding physical channel in the HSUPA technology of the single carrier TD-SCDMA system, the E-PUCH, E-AGCH and E-HICH physical channels configured on each carrier have same structure.

On network side, according to the existing network structure (namely, the radio network consists of two network elements (the RNC and the node B), and the RNC and the node B are connected through Iub interface), the process can be carried out by the RNC initiating through the Iub interface to the node B a physical shared channel reconfiguration progress in the node B application part (NBAP). When the E-PUCH, E-HICH and E-AGCH physical channel resource pools are configured on the "physical shared channel reconfiguration request" message, the "physical shared channel reconfiguration request" message comprises carrier attribute information to indicate the carrier frequency attribute of these physical channels, so as to configure the E-PUCH, E-HICH and E-AGCH physical channel resource pools on the plural carriers. If the radio network on the network side just has one network element (node B), then the process can be carried out by the cooperation between the relative functional modules inside the node B.

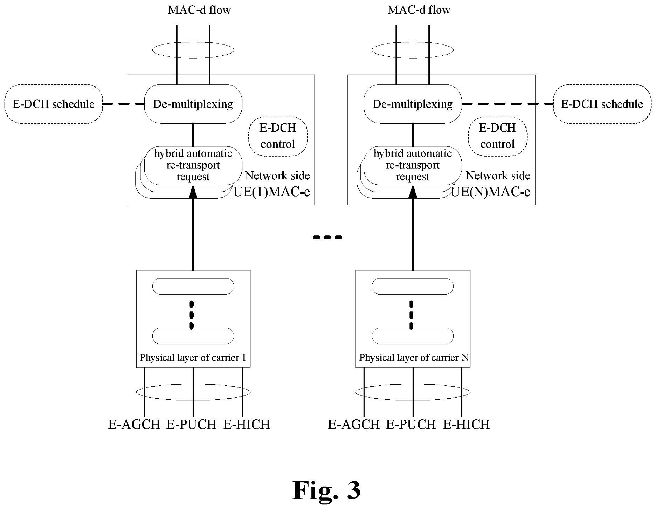

During the process, as shown in Fig.3, an E-DCH schedule entity is established in the node B simultaneously for each carrier, to manage the above physical channel resource on the carrier.

In one multiple carrier cell, when the RNC and/or the node B determine to allocate the E-PUCH resource to one UE for carrying out the E-DCH transport, firstly, one E-PUCH physical channel carrier resource is allocated to the UE. At the same time, similar to the HSUPA technology in the single carrier TD-SCDMA system, the RNC and/or the node B need to allocate through high level signaling to the UE the E-AGCH and E-HICH physical channel resource pool on the carrier for controlling the signaling transport, and indicates the allocated E-PUCH physical channel carrier resource through the carrier attribute of the E-AGCH and E-HICH physical channel. During the configuration and the sequential use of these resources by the RNC and/or the node B, the uplink and/or downlink carrier of the UE and the reception and/or emission ability of the physical channel need to be considered, and therefore the relative high level signaling in this process can carry the relative information of the UE ability.

Concretely, on the network side, according to the existing network structure, it is usually the RNC to determine to perform the E-DCH transport for one UE, and initiate through the Iub interface to the Node B a radio link establish process and a radio link reconfiguration process in the NBAP protocol, so as to allocate and schedule the relative resources of the E-DCH transport. Usually, the node B is used for allocating to the UE the E-AGCH and E-HICH physical channel resource pools including the allocation of the carrier attributes of these physical channels, which are transmitted to the RNC through the "radio link setup response" or "radio link reconfiguration ready" message. While the E-PUCH physical channel carrier resource can be allocated by the RNC or the node B. If the E-PUCH physical channel carrier resource is allocated by the RNC, then it is included in the "radio link setup request" or "radio link reconfiguration prepare" message transmitted to the node B the indication information relative to the E-PUCH physical channel carrier resource or the carrier information of explicitly indicating the E-PUCH physical channel carrier resource or the carrier information of inexplicitly indicating the E-PUCH physical channel carrier resource by associating with other physical channel (such as DPCH physical channel, including carrier attribute). Also, the Node B just can allocate to the UE the E-AGCH and E-HICH physical channel resource pool on the carrier indicated by the indication information. If the E-PUCH physical channel carrier resource is allocated by the node B, then it is included in the "radio link setup response" or "radio link reconfiguration ready" message transmitted to the RNC the indication information relative to the E-PUCH physical channel carrier resource which is usually inexplicitly indicated through the carrier attribute of the E-AGCH and E-HICH physical channels, because the E-AGCH and the E-HICH physical channels must be allocated on the carrier where the E-PUCH physical channel carrier resource is located. If the radio network on the network side only has one network element (the node B), then this process can be carried out by the cooperation between the relative functional modules inside the node B.

The above allocated scheduling E-DCH transport relative resource is transmitted to the UE by the RNC or the node B through high level signaling. According to the existing network structure, the process is carried out by the RNC initiating through the Uu interface (the interface between the network side and the UE) to the UE the processes, such as the RRC connection establishment process, the radio bearer establishment process, the radio bearer reconfiguration process, the radio bearer release process, the transport channel reconfiguration process, the physical channel reconfiguration process, the cell update process and so on in the radio resource control (RRC) protocol. The relative resources configuration information of the scheduling E-DCH transport comprises the corresponding "RRC connection setup" message, the "radio bearer setup" message, the "radio bearer reconfiguration" message, the "radio bearer release" message, the "transport channel reconfiguration" message, the "physical channel reconfiguration" message and the "cell update confirm" message, wherein the physical channel configuration information comprises the carrier attribute information of the physical channel. If the radio network on the network side just has one network element (node B), the relative resources configuration information of the scheduling E-DCH transport is transmitted to the UE by the node B through the process and message similar to the above.

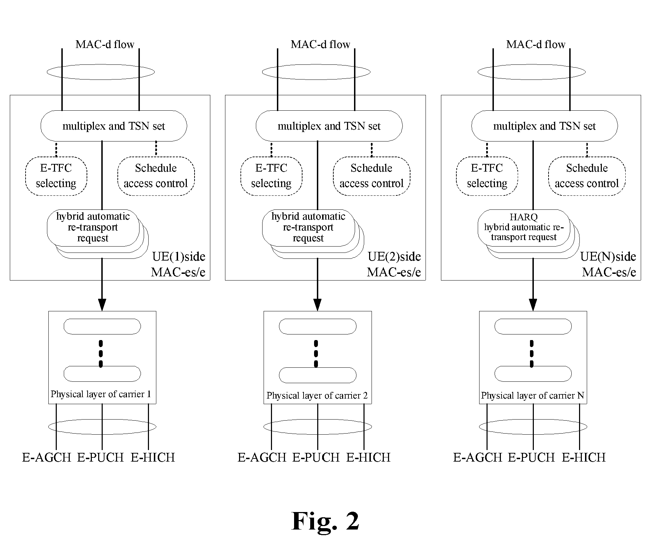

S104, the E-DCH transport data is mapped onto the E-PUCH physical channel. While allocating the relative resources of the scheduling E-DCH transport to the UE, a MAC-e/MAC-es entity is respectively established on the network side and the UE side, as for the allocated carrier. Same as the above HSUPA technology in the single carrier system, it is needed on the MAC-e/MAC-es sublayer to establish for each UE one MAC-e/MAC-es entity respectively in the node B/RNC on the network side and inside the UE, so as to complete the relative functions of schedule, priority treatment, feedback, re-transport and so on along with other relative entities. As shown in Fig.2 and Fig.3, each UE just establishes the MAC-e/MAC-es entity based on the allocated E-PUCH physical channel carrier resources, but different UEs can establish the MAC-e/MAC-es entities on different carriers. Compared with the HSUPA technology of the single carrier TD-SCDMA system, the MAC-e/MAC-es entity and the functional entity are completely identical. The E-DCH transport data are mapped onto the E-DCH channel through the MAC-e/MAC-es entity and further mapped to the scheduling E-PUCH physical channel.

S106, the E-PUCH physical channel is scheduling and granted to the user equipment through the E-AGCH physical channel for transmitting the E-DCH transport data to the base station, and feeding back through the E-HICH channel to the UE the status information of the E-DCH transport data received by the base station.

On one carrier allocated with the E-PUCH physical channel carrier resource, the E-PUCH physical channel resource on the carrier is dynamically scheduling and granted to the UE by the node B through an E-AGCH physical channel. On the UE side, the E-DCH transport data are mapped onto the E-PUCH physical channel resource of the carrier through the MAC-e/MAC-es entity; and on the node B of the network side, the E-DCH data are received on the E-PUCH physical channel of the carrier. Afterwards, ACK/NACK information is fed back by the node B through an E-HICH channel.

At a certain TTI, if the node B determines to grant the UE to carry out the E-DCH transport, then the node B dynamically allocates the E-PUCH physical channel resource to the UE on the carrier allocated with the E-PUCH physical channel resource, according to the resource configuration condition, and grants, through one E-AGCH physical channel on the carrier, to the UE the E-PUCH physical channel resource, for the E-DCH data transport.

On the UE side, at a certain TTI, according to the grant information received from the E-AGCH channel, the E-DCH transport data are mapped onto the granted E-PUCH physical channel of the allocated carrier through the MAC-e/MAC-es entity; and in the node B on the network side, the E-DCH data are received on the granted E-PUCH physical channel on the allocated carrier, wherein the mapping process of the E-DCH data onto the E-PUCH physical channel and the treatment process of the physical layer are same as the HSUPA technology in the single carrier TD-SCDMA system.

During the process, the E-AGCH physical channel for transmitting the E-PUCH physical channel is one selected from the E-AGCH physical channel resource pool allocated to the UE. Normally, after the UE is allocated with the relative physical channel resource of the above E-DCH transport, the UE needs to monitor all the E-AGCH physical channels in the allocated E-AGCH physical channel resource pool, and searches and identifies one E-AGCH channel that is truly allocated to the UE to use, through "UE identification" on the E-AGCH channel. While on the network side, the nodes B needs to choose one from the E-AGCH physical channel resource pool allocated to the UE, for transmitting the E-PUCH physical channel schedule grant information.

While the node B dynamically allocates the E-PUCH physical channel resource to the UE through the E-AGCH, the node B also indicates, through the E-HICH indication information on the E-AGCH, one E-HICH channel positioned on the same carrier which is used during subsequently transmitting ACK/NACK, with the indication method identical to the HSUPA technology in the single carrier TD-SCDMA system.

On the UE side, according to the configuration condition of the E-HICH physical channel pool and the E-HICH channel indication information on the E-AGCH channel, the E-HICH physical channel is received and further it is received the receiving condition information of the E-DCH transport fed back by the node B, namely the ACK/NACK information.

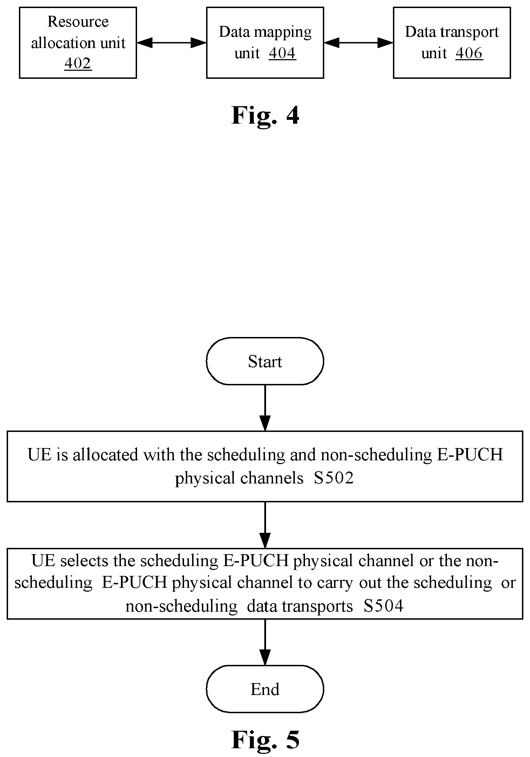

Hereinafter, referring to Fig 4, the data transport system used for carrying out the above process is described. As shown in Fig.4, the data transport system comprises: a resource allocation unit 402 for allocating the E-PUCH physical channel carrier resource to the user equipment and allocating the E-AGCH physical channel and the E-HICH physical channel on the allocated E-PUCH physical channel carrier resource; a data mapping unit 404 for mapping the data to be transmitted onto the E-PUCH physical channel; and a data transport unit 406 for scheduling and granting the E-PUCH physical channel to the user equipment through the E-AGCH physical channel for transmitting to the base station the data to be transmitted, and feeding back through the E-HICH channel to the user equipment the status information of the base station receiving the data to be transmitted, wherein the data to be transmitted are mapped onto the E-DCH channel by the data mapping unit through the media access control layer, and further mapped onto the E-PUCH physical channel. The data to be transmitted are the data from the enhanced dedicated transport channel.

In addition, during the non-scheduling transport process, the RNC allocates a carrier resource to each UE. The relative resource is allocated on this carrier with a relative resource allocation method of the non-scheduling E-DCH transport, which is same as the HSUPA technology in the single carrier TD-SCMDA system, and the resource is used for carrying out the non-scheduling E-DCH transport.

Incidentally, at a certain TTI, if the UE is allocated with the scheduling or non-scheduling E-PUCH physical channel resource, then on the corresponding carrier, the UE uses the scheduling or non-scheduling E-PUCH physical channel resource to carry out the scheduling or non-scheduling transport.

In addition, at a certain TTI, as shown in Fig.5, if the UE is allocated with the scheduling and non-scheduling E-PUCH physical channel resources (S502) at the same time, then the user equipment can choose the scheduling E-PUCH physical channel or the non-scheduling E-PUCH physical channel to carry out the scheduling or non-scheduling data transport (S504), wherein the scheduling E-PUCH physical channel and the non-scheduling E-PUCH physical channel can be positioned on the same or different carriers.

All in all, in the present invention, the HSUPA technology can be independently supported on each carrier of the multiple carrier cell. One UE is statically configured to carry out the scheduling E-DCH transport on one carrier, and different UEs can carry out the scheduling E-DCH transport on different carriers. The carrier resources in the multiple carrier TD-SCDMA system can be utilized sufficiently and thus the cell uplink transport throughout is improved.

## Claims

1. A high speed uplink packet access method used for a multi-carrier time division synchronization code division multiple access, TD-SCDMA, system, comprising:
allocating to a user equipment, UE, a carrier on which a schedulable enhanced physical uplink channel is configured, and configuring on the allocated carrier an enhanced absolute grant channel and an enhanced hybrid automatic repeat request, HARQ,
acknowledgement indicator channel;
mapping the data from an enhanced dedicated transport, E-DCH, onto the schedulable enhanced physical uplink channel in a media access control layer; and granting the schedulable enhanced physical uplink channel to the user equipment through the enhanced absolute grant channel for receiving the data from the enhanced dedicated transport channel transmitted from the user equipment to the base station, and the base station feeding back the status information about the received data from the enhanced dedicated transport channel to the user equipment through the enhanced HARQ acknowledgement indicator channel;
wherein the physical channel resources of the schedulable enhanced physical uplink channel, the enhanced absolute grant channel and the enhanced HARQ acknowledgement indicator channel are configured on each of more than one carriers in a multiple-carrier cell, and different user equipments carry out E-DCH transmission in a scheduled mode on different carriers of the more than one carriers;
**characterized in that** the process of allocating the carrier, on which the schedulable enhanced physical uplink channel is configured, to the UE comprises the following steps: a radio network controller allocates the carrier, on which the schedulable enhanced physical uplink channel is configured, to the user equipment and requests the base station to allocate, to the user equipment, resource used to control the transport of the data from the enhanced dedicated transport channel; and the base station, in response of the request of the radio network controller, configures the enhanced absolute grant channel and the enhanced HARQ acknowledgement indicator channel on said carrier on which the schedulable enhanced physical uplink channel is configured.

2. The high speed uplink packet access method according to Claim 1, wherein the method further comprises:
allocating to the UE a carrier on which a non-scheduling enhanced physical uplink channel is configured, and transmitting the data from the enhanced dedicated transport channel to the base station through the non-scheduling enhanced physical uplink channel.

3. The high speed uplink packet access method according to Claim 1 or 2, wherein in one transport time interval, the UE choose the schedulable enhanced physical uplink channel or the non-scheduling uplink enhanced physical channel to transmit the data from the enhanced dedicated transport channel.

4. The high speed uplink packet access method according to Claim 2, wherein the carrier allocated to the UE and on which the schedulable enhanced physical uplink channel is configured, and the carrier allocated to the UE and on which the non-scheduling enhanced physical uplink channel is configured, are the same carrier or two different carriers.

5. The high speed uplink packet access method according to Claim 1, wherein the process of allocating to the UE the carrier on which the schedulable enhanced physical uplink channel is configured comprises the following steps:
radio network controller requests the base station to allocate, to the user equipment, resource used for transmitting the data from the enhanced dedicated transport channel;
the base station, in response of the request of the radio network controller, allocates to the user equipment the carrier on which the schedulable enhanced physical uplink channel is configured, and configuring an enhanced absolute grant channel and an enhanced HARQ acknowledgement indicator channel on the allocated carrier.

6. A high speed uplink packet access system used for a multi-carrier time division synchronization code division multiple access, TD-SCDMA, system, comprising:
a resource allocation unit (402) of a radio network controller adapted to allocate a carrier on which a schedulable enhanced physical uplink channel is configured to a user equipment, UE, and to request a base station to configure an enhanced absolute grant channel and an enhanced hybrid automatic repeat request, HARQ, acknowledgement indicator channel on the allocated carrier;
a data mapping unit (404) of the user equipment adapted to map the data from an enhanced dedicated transport channel, E-DCH, onto the schedulable enhanced physical uplink channel; and a data transport unit (406) of the base station adapted to grant the schedulable enhanced physical uplink channel to the user equipment through the enhanced absolute grant channel for receiving the data transmitted by the user equipment from the enhanced dedicated transport channel to the base station, to feedback the status information about the received data from the enhanced dedicated transport channel to the user equipment through the enhanced HARQ acknowledgement indicator channel;
wherein the physical channel resources of the schedulable enhanced physical uplink channel, the enhanced absolute grant channel and the enhanced HARQ acknowledgement indicator channel are configured on each of more than one carriers in a multiple-carrier cell, and different user equipments carry out E-DCH transmission in a scheduled mode on different carriers of the more than one carriers;
**characterized in that** the resource allocation unit (402) is further configured to allocate the carrier, on which the schedulable enhanced physical uplink channel is configured, to the user equipment and request the base station to allocate, to the user equipment, resource used to control the transport of the data from the enhanced dedicated transport channel in order to make the base station configure the enhanced absolute grant channel and the enhanced HARQ acknowledgement indicator channel on said carrier on which the schedulable enhanced physical uplink channel is configured.

7. The high speed uplink packet access system according to Claim 6, wherein the data mapping unit (404) is adapted to map the data from the enhanced dedicated transport channel onto the schedulable enhanced physical uplink channel in media access control layer.

## Patentansprüche

1. Verfahren für schnellen Uplink-Paketzugriff in einem System mit Mehrträger-Synchronisationscodemultiplexverfahren mit Zeitaufteilung (Time Division Synchronization Code Division Multiple Access, TD-SCDMA), umfassend:
das Zuteilen eines Trägers, auf dem ein planbarer erweiterter physikalischer Uplink-Kanal konfiguriert ist, zu einem Benutzergerät (User Equipment, UE) und das Konfigurieren auf dem zugeteilten Träger eines Enhanced-Absolute-Grant-Kanals und eines erweiterten Bestätigungsindikatorkanals mit hybrider automatischer Wiederholungsanforderung (Hybrid Automatic Repeat Request, HARQ);
das Abbilden der Daten aus einem erweiterten dedizierten Transportkanal (Enhanced Dedicated Transport Channel, E-DCH) auf dem planbaren erweiterten physikalischen Uplink-Kanal in einer MAC-Schicht; und
das Genehmigen des Zugriffs auf den planbaren erweiterten physikalischen Uplink-Kanal für das Benutzergerät durch den Enhanced-Absolute-Grant-Kanal für das Empfangen der Daten aus dem erweiterten dedizierten Transportkanal, welche von dem Benutzergerät an die Basisstation übertragen werden, und wobei die Basisstation die Statusinformationen über die empfangenen Daten aus dem erweiterten dedizierten Transportkanal durch den erweiterten HARQ-Bestätigungsindikatorkanal an das Benutzergerät zurückführt;
wobei die physischen Kanalressourcen des planbaren erweiterten physikalischen Uplink-Kanals, des Enhanced-Absolute-Grant-Kanals und des erweiterten HARQ-Bestätigungsindikatorkanals auf jedem der mehr als einen Träger in einer Zelle mit mehreren Trägern konfiguriert sind, und verschiedene Benutzergeräte die E-DCH-Übertragung in einem geplanten Modus auf verschiedenen Trägern des mehr als einen Trägers durchführen;
**dadurch gekennzeichnet, dass** der Prozess des Zuteilens des Trägers, auf dem der planbare erweiterte physikalische Uplink-Kanal konfiguriert ist, zu dem UE die folgenden Schritte umfasst: eine Funknetzsteuerung weist den Träger, auf dem der planbare erweiterte physikalische Uplink-Kanal konfiguriert ist, dem Benutzergerät zu und fordert die Basisstation auf, dem Benutzergerät die Ressourcen zuzuteilen, die für das Steuern des Transports der Daten von dem erweiterten dedizierten Transportkanal verwendet werden; und die Basisstation konfiguriert in Reaktion auf die Anforderung der Funknetzsteuerung den Enhanced-Absolute-Grant-Kanal und den erweiterten HARQ-Bestätigungsindikatorkanal auf dem Träger, auf dem der planbare erweiterte physikalische Uplink-Kanal konfiguriert ist.

2. Verfahren für schnellen Uplink-Paketzugriff nach Anspruch 1, wobei das Verfahren ferner Folgendes umfasst:
das Zuteilen an das UE eines Trägers, auf dem ein keiner Planung unterliegender erweiterter physikalischer Uplink-Kanal konfiguriert ist, und das Übertragen der Daten aus dem erweiterten dedizierten Transportkanal an die Basisstation durch den keiner Planung unterliegenden erweiterten physikalischen Uplink-Kanal.

3. Verfahren für schnellen Uplink-Paketzugriff nach Anspruch 1 oder 2, wobei das UE in einem Transportzeitintervall den planbaren erweiterten physikalischen Uplink-Kanal oder den keiner Planung unterliegenden erweiterten physikalischen Uplink-Kanal auswählt, um die Daten aus dem erweiterten dedizierten Transportkanal zu übertragen.

4. Verfahren für schnellen Uplink-Paketzugriff nach Anspruch 2, wobei der Träger, der dem UE zugeteilt ist und auf dem der planbare erweiterte physikalische Uplink-Kanal konfiguriert ist, und der Träger, der dem UE zugeteilt ist und auf dem der keiner Planung unterliegende erweiterte physikalische Uplink-Kanal konfiguriert ist, derselbe Träger ist oder zwei verschiedene Träger sind.

5. Verfahren für schnellen Uplink-Paketzugriff nach Anspruch 1, wobei der Prozess des Zuteilens des Trägers, auf dem der planbare erweiterte physikalische Uplink-Kanal konfiguriert ist, zu dem UE die folgenden Schritte umfasst:
die Funknetzsteuerung fordert die Basisstation auf, dem Benutzergerät eine Ressource zuzuteilen, die für die Übertragung der Daten aus dem erweiterten dedizierten Transportkanal verwendet wird;
die Basisstation weist in Reaktion auf die Anforderung der Funknetzsteuerung das Benutzergerät dem Träger zu, auf dem der planbare erweiterte physikalische Uplink-Kanal konfiguriert ist, und wobei ein Enhanced-Absolute-Grant-Kanal und ein erweiterter HARQ-Bestätigungsindikatorkanal auf dem zugeteilten Träger konfiguriert werden.

6. System für schnellen Uplink-Paketzugriff in einem System mit Mehrträger-Synchronisationscodemultiplexverfahren mit Zeitaufteilung (TD-SCDMA), umfassend:
eine Ressourcenzuteilungseinheit (402) einer Funknetzsteuerung, welche angepasst ist, um einen Träger, auf dem ein planbarer erweiterter physikalischer Uplink-Kanal konfiguriert ist, einem Benutzergerät (UE) zuzuweisen und die Basisstation aufzufordern, Folgendes zu konfigurieren: einen Enhanced-Absolute-Grant-Kanal und einen erweiterten Bestätigungsindikatorkanal mit hybrider automatischer Wiederholungsanforderung (HARQ) auf dem zugeteilten Träger;
eine Datenabbildungseinheit (404) des Benutzergeräts, die angepasst ist, um die Daten aus einem erweiterten dedizierten Transportkanal (E-DCH) auf dem planbaren erweiterten physikalischen Uplink-Kanal abzubilden; und
eine Datentransporteinheit (406) der Basisstation, die angepasst ist, um den Zugriff auf den planbaren erweiterten physikalischen Uplink-Kanal für das Benutzergerät durch den Enhanced-Absolute-Grant-Kanal für das Empfangen der Daten aus dem erweiterten dedizierten Transportkanal zu genehmigen, welche von dem Benutzergerät an die Basisstation übertragen werden, die Statusinformationen über die empfangenen Daten aus dem erweiterten dedizierten Transportkanal an das Benutzergerät durch den erweiterten HARQ-Bestätigungsindikatorkanal zurückführt;
wobei die physikalischen Kanalressourcen des planbaren erweiterten physikalischen Uplink-Kanals, des Enhanced-Absolute-Grant-Kanals und des erweiterten HARQ-Bestätigungsindikatorkanals auf jedem der mehr als einen Träger in einer Zelle mit mehreren Trägern konfiguriert sind, und verschiedene Benutzergeräte die E-DCH-Übertragung in einem geplanten Modus auf verschiedenen Trägern des mehr als einen Trägers durchführen;
**dadurch gekennzeichnet, dass** die Ressourcenzuteilungseinheit (402) ferner konfiguriert ist, um den Träger, auf dem der planbare erweiterte physikalische Uplink-Kanal konfiguriert ist, dem Benutzergerät zuzuteilen und die Basisstation aufzufordern, dem Benutzergerät die Ressource zuzuteilen, die für das Steuern der Übertragung der Daten aus dem erweiterten dedizierten Transportkanal verwendet wird, damit die Basisstation das Konfigurieren des Enhanced-Absolute-Grant-Kanals und des erweiterten HARQ-Bestätigungsindikatorkanals auf dem Träger vornimmt, auf dem der planbare erweiterte physikalische Uplink-Kanal konfiguriert ist.

7. System für schnellen Uplink-Paketzugriff nach Anspruch 6, wobei die Datenabbildungseinheit (404) angepasst ist, um die Daten aus dem erweiterten dedizierten Transportkanal auf dem planbaren erweiterten physikalischen Uplink-Kanal in der MAC-Schicht abzubilden.

## Revendications

1. Procédé d'accès par paquets en liaison montante à grande vitesse utilisé pour un système d'accès multiple à division de code de synchronisation de division temporelle multiporteuse, TD-SCDMA, comprenant les étapes consistant à :
allouer à un équipement utilisateur, UE, une porteuse sur laquelle un canal en liaison montante physique amélioré programmable est configuré, et configurer sur la porteuse allouée un canal d'attribution absolu amélioré et un canal indicateur d'accusé de réception d'une demande de répétition automatique hybride, HARQ, amélioré ;
mapper les données à partir d'un transport dédié amélioré, E-DCH, sur le canal en liaison montante physique amélioré programmable dans une couche de contrôle d'accès au support ; et
attribuer le canal en liaison montante physique amélioré programmable à l'équipement utilisateur par le biais du canal d'attribution absolu amélioré permettant de recevoir les données en provenance du canal de transport dédié amélioré transmises de l'équipement utilisateur à la station de base, et la station de base retournant les informations d'état concernant les données reçues en provenance du canal de transport dédié amélioré à l'équipement utilisateur par le biais du canal indicateur d'accusé de réception HARQ amélioré ;
dans lequel les ressources de canal physique du canal en liaison montante physique amélioré programmable, du canal d'attribution absolu amélioré et du canal indicateur d'accusé de réception HARQ amélioré sont configurées sur chacune de plus d'une porteuse dans une cellule à porteuses multiples, et différents équipements utilisateurs exécutent une transmission E-DCH dans un mode programmé sur différentes porteuses parmi les plus d'une porteuse ;
**caractérisé en ce que**
le processus d'allocation de la porteuse, sur laquelle le canal en liaison montante physique amélioré programmable est configuré, à l'UE comprend les étapes suivantes :
un contrôleur de réseau radio alloue la porteuse, sur laquelle le canal en liaison montante physique amélioré programmable est configuré, à l'équipement utilisateur et demande à la station de base d'allouer, à l'équipement utilisateur, une ressource utilisée pour contrôler le transport des données en provenance du canal de transport dédié amélioré ; et la station de base, en réponse à la demande du contrôleur de réseau radio, configure le canal d'attribution absolu amélioré et le canal indicateur d'accusé de réception HARQ amélioré sur ladite porteuse sur laquelle le canal en liaison montante physique amélioré programmable est configuré.

2. Procédé d'accès par paquets en liaison montante à grande vitesse selon la revendication 1, dans lequel le procédé comprend en outre les étapes consistant à :
allouer à l'UE une porteuse sur laquelle un canal en liaison montante physique amélioré non programmable est configuré, et transmettre les données en provenance du canal de transport dédié amélioré à la station de base par le biais du canal en liaison montante physique amélioré non programmable.

3. Procédé d'accès par paquets en liaison montante à grande vitesse selon la revendication 1 ou 2, dans lequel dans un intervalle de temps de transport, l'UE choisit le canal en liaison montante physique amélioré programmable ou le canal physique amélioré en liaison montante non programmable pour transmettre les données en provenance du canal de transport dédié amélioré.

4. Procédé d'accès par paquets en liaison montante à grande vitesse selon la revendication 2, dans lequel la porteuse allouée à l'UE et sur laquelle le canal en liaison montante physique amélioré programmable est configuré, et la porteuse allouée à l'UE et sur laquelle le canal en liaison montante physique amélioré non programmable est configuré, sont la même porteuse ou deux porteuses différentes.

5. Procédé d'accès par paquets en liaison montante à grande vitesse selon la revendication 1, dans lequel le processus d'allocation à l'UE de la porteuse sur laquelle le canal en liaison montante physique amélioré programmable est configuré comprend les étapes suivantes :
le contrôleur de réseau radio demande à la station de base d'allouer, à l'équipement utilisateur, une ressource utilisée pour transmettre les données en provenance du canal de transport dédié amélioré ;
la station de base, en réponse à la demande du contrôleur de réseau radio, alloue à l'équipement utilisateur la porteuse sur laquelle le canal en liaison montante physique amélioré programmable est configuré, et configurant un canal d'attribution absolu amélioré et un canal indicateur d'accusé de réception HARQ amélioré sur la porteuse allouée.

6. Système d'accès par paquets en liaison montante à grande vitesse utilisé pour un système d'accès multiple à division de code de synchronisation de division temporelle multiporteuse, TD-SCDMA, comprenant :
une unité (402) d'allocation de ressources d'un contrôleur de réseau radio adaptée pour allouer une porteuse sur laquelle un canal en liaison montante physique amélioré programmable est configuré à un équipement utilisateur, UE, et pour demander à une station de base de configurer un canal d'attribution absolu amélioré et un canal indicateur d'accusé de réception d'une demande de répétition automatique hybride, HARQ, amélioré sur la porteuse allouée ;
une unité (404) de mappage de données de l'équipement utilisateur adaptée pour mapper les données en provenance d'un canal de transport dédié amélioré, E-DCH, sur le canal en liaison montante physique amélioré programmable ; et
une unité (406) de transport de données de la station de base adaptée pour attribuer le canal en liaison montante physique amélioré programmable à l'équipement utilisateur par le biais du canal d'attribution absolu amélioré permettant de recevoir les données transmises par l'équipement utilisateur en provenance du canal de transport dédié amélioré à la station de base, pour retourner les informations d'état concernant les données reçues en provenance du canal de transport dédié amélioré à l'équipement utilisateur par le biais du canal indicateur d'accusé de réception HARQ amélioré ;
dans lequel les ressources de canal physique du canal en liaison montante physique amélioré programmable, du canal d'attribution absolu amélioré et du canal indicateur d'accusé de réception HARQ amélioré sont configurées sur chacune de plus d'une porteuse dans une cellule à porteuses multiples, et différents équipements utilisateurs exécutent une transmission E-DCH dans un mode programmé sur différentes porteuses parmi les plus d'une porteuse ;
**caractérisé en ce que**
l'unité (402) d'allocation de ressources est configurée en outre pour allouer la porteuse, sur laquelle le canal en liaison montante physique amélioré programmable est configuré, à l'équipement utilisateur, et demander à la station de base d'allouer, à l'équipement utilisateur, une ressource utilisée pour commander le transport des données en provenance du canal de transport dédié amélioré de sorte que la station de base configure le canal d'attribution absolu amélioré et le canal indicateur d'accusé de réception HARQ amélioré sur ladite porteuse sur laquelle le canal en liaison montante physique amélioré programmable est configuré.

7. Système d'accès par paquets en liaison montante à grande vitesse selon la revendication 6, dans lequel l'unité (404) de mappage de données est adaptée pour mapper les données en provenance du canal de transport dédié amélioré sur le canal en liaison montante physique amélioré programmable dans une couche de contrôle d'accès au support.
